# EUROPEAN PATENT SPECIFICATION

(11) **EP 3 128 794 B1**
(45) Date of publication and mention of the grant of the patent: **01.01.2020**
(21) Application number: 14890117.6
(22) Date of filing: 22.04.2014
(51) Int. Cl.: H04W 72/04

(54) **RESOURCES BROADCASTING METHOD AND DEVICE**
VERFAHREN UND VORRICHTUNG ZUR RESSOURCENÜBERTRAGUNG
PROCÉDÉ ET DISPOSITIF DE DIFFUSION DE RESSOURCES

(43) Date of publication of application: 08.02.2017
(73) Proprietor: Huawei Technologies Co., Ltd., Longgang District Shenzhen, Guangdong 518129 (CN)
(72) Inventor: MA, Jie, Shenzhen Guangdong 518129 (CN); CAO, Zhenzhen, Shenzhen Guangdong 518129 (CN)
(74) Representative: Gill Jennings & Every LLP
(86) International application number: PCT/CN2014/075973
(87) International publication number: WO 2015/161454

(56) References cited:
- WO-A1-2012/159270
- CN-A- 102 883 438
- CN-A- 103 442 442
- LG ELECTRONICS INC: "Medium Access for D2D Communication", 3GPP DRAFT; R2-134426 [D2D-C] MEDIUM ACCESS FOR D2D COMMUNICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN , vol. RAN WG2, no. Sanfransisco, USA; 20131111 - 20131115 13 November 2013 (2013-11-13), XP050737132, Retrieved from the Internet: URL:http://www.3gpp.org/ftp/Meetings_3GPP_ SYNC/RAN/RAN2/Docs/ [retrieved on 2013-11-13]

## Description

### TECHNICAL FIELD

The present invention relates to the mobile communications field, and in particular, to a resource broadcasting method and apparatus.

### BACKGROUND

In the case of relatively perfect coverage of wireless communication, both an operator and a government expect that wireless communication can be used to process some public safety events. After a safety event occurs, an emergency command group and a rescue team perform communication in a specific geographical area, and each group member holds a special terminal. This special terminal is referred to as a device-to-device (D2D) device, which means that the terminal can perform cellular communication with a base station like a common wireless terminal, and can directly communicate with another device-to-device terminal at the same time. Because of block of terrain and a time-varying characteristic of a wireless signal, a coverage hole in cellular coverage actually occurs, and in a public safety requirement, application of a device-to-device terminal needs to be implemented both in the case of network coverage and in the case of no network coverage. Generally, public safety personnel take action per team of multiple persons, which is referred to as a group or a cluster.

In the prior art, when a terminal requests a resource from a base station, the terminal sends a size of content cached by a Media Access Control (MAC) layer of the terminal in a linked state, and the base station allocates a resource to a terminal according to a priority of each terminal and a data amount cached by the terminal. This resource allocating manner causes a same resource to be allocated to terminals. However, for two device-to-device terminals, because geographical locations are very close, using a same resource causes severe interference to a receiving terminal. As a result, data sent by either of the two terminals cannot be received.
WO2012/159270 and LG Electronics Inc. "Medium Access for D2D Communication" 3GPP Draft" November 2013 disclose resource broadcasting methods and apparatus.

Embodiments of the present invention provide a resource broadcasting method and apparatus, which can resolve a problem that two terminals occupy a same resource.

In accordance with the invention, a resource broadcasting method and a resource broadcasting apparatus are provided as set forth in the claims.

According to the resource broadcasting method and apparatus provided in the embodiments of the present invention, a request message of requesting a first frequency domain resource and a first time domain resource that are used for device-to-device D2D communication is sent; a second frequency domain resource used for data transmission is obtained from the first frequency domain resource obtained by requesting, and a second time domain resource used for data transmission is obtained from the first time domain resource obtained by requesting; and a declaration message is repeatedly sent, where the declaration message includes: the second frequency domain resource and the second time domain resource. Therefore, after requesting a resource, a terminal declares, to another terminal, information about a resource used by the terminal; and another adjacent terminal learns that the resource is to be occupied, and when requesting a resource, bypasses the resource that is to be occupied by the foregoing terminal, thereby resolving a problem that two terminals occupy a same resource.

### BRIEF DESCRIPTION OF DRAWINGS

FIG. 1 is a flowchart of a resource broadcasting method according to Embodiment 1 of the present invention;
FIG. 2 is a schematic diagram of carrying a time domain resource by using a physical layer sequence;
FIG. 3 is a flowchart of a resource broadcasting method according to Embodiment 2 of the present invention;
FIG. 4 is a flowchart of a resource broadcasting method according to Embodiment 3 of the present invention;
FIG. 5 is a schematic diagram of a resource broadcasting apparatus according to Embodiment 4 of the present invention;
FIG. 6 is a schematic diagram of a resource broadcasting apparatus according to Embodiment 5 of the present invention;
FIG. 7 is a schematic diagram of a resource broadcasting apparatus according to Embodiment 6 of the present invention; and
FIG. 8 is a schematic diagram of a resource broadcasting apparatus according to Embodiment 7 of the present invention.

### DESCRIPTION OF EMBODIMENTS

The technical solutions of the present invention are further described in detail with reference to accompanying drawings and embodiments as follows:

The method provided in the embodiments of the present invention is applied to a cellular network, and a terminal in the network is referred to as a device-to-device terminal, which means that the terminal can perform cellular communication with a base station like a common wireless terminal, and can directly communicate with another device-to-device terminal at the same time, that is, D2D communication. In the network, when the device-to-device terminal wants to communicate with another terminal by using a D2D technology, the terminal sends, to the base station, a request message of requesting a resource, and the base station allocates an idle resource to the terminal according to content requested by the terminal. The resource may be used for a period of time. After obtaining the resource allocated by the base station, the terminal first declares a frequency domain resource and a time domain resource that are to be used by the terminal, and then sends data.

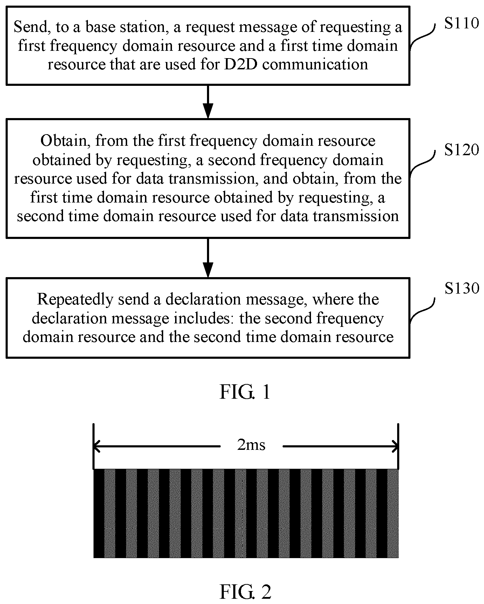

FIG. 1 is a flowchart of a resource broadcasting method according to Embodiment 1 of the present invention. As shown in FIG. 1, the method is executed by a terminal, and the method specifically includes the following steps:

S110. Send, to a base station, a request message of requesting a first frequency domain resource and a first time domain resource that are used for D2D communication.

It should be noted that, the terminal in this embodiment is a D2D terminal. A communication process of the D2D terminal includes two stages: cellular communication and D2D communication, and the two stages are separated in terms of time. Specifically, a base station side divides a time occupied by an entire communication process into several same time periods. The time periods may be but are not limited to 10 ms or several 10 ms, and each time period is represented as a subframe set. Some subframes in the subframe set are used to perform cellular communication, and some other subframes are used to perform D2D communication. The subframes used to perform cellular communication are referred to as a first subframe set, and the subframes used to perform D2D communication are referred to as a second subframe set.

In the foregoing time period, the subframes in the first subframe set and the subframes in the second subframe set may separately occur in terms of time, or may alternately occur in terms of time.

For example, when the foregoing time period is 10 ms, and in a subframe set of 10 ms, the subframes in the first subframe set and the subframes in the second subframe set separately occur in terms of time, the following is shown:

| **T₀** | **T₁** |
|---|---|
| Subframe in a first subframe set | Subframe in a second subframe set |

In a subframe set of 10 ms, when the subframes in the first subframe set and the subframes in the second subframe set alternately occur in terms of time, the following is shown:

| **T₀** | **T₁** | **T₀** | **T₁** |
|---|---|---|---|
| Subframe in a first subframe set | Subframe in a second subframe set | Subframe in a first subframe set | Subframe in a second subframe set |

When there is data that needs to be sent, the terminal needs to request a resource from the base station in a cellular communication stage. The resource includes a first frequency domain resource and a first time domain resource. The first frequency domain resource refers to a frequency resource and a bandwidth and the first time domain resource refers to a subframe used for D2D communication, that is, the second subframe set. Specifically, when the first subframe set is reached, the terminal sends, to the base station, a message of requesting the first frequency domain resource and the second subframe set that are used for D2D communication.

S120. Obtain, from the first frequency domain resource obtained by requesting, a second frequency domain resource used for data transmission, and obtain, from the first time domain resource obtained by requesting, a second time domain resource used for data transmission.

It should be noted that, the D2D communication process of the D2D terminal further includes two stages: resource declaration and data transmission (that is, data sending or receiving). Therefore, to implement time separation for the two stages, generally, some subframes in the second subframe set are used for resource declaration, and some other subframes are used for data transmission. A subframe set used for data transmission is the second time domain resource. Specifically, after requesting and obtaining the first frequency domain resource and the second subframe set from the base station, the terminal further needs to obtain, from the first frequency domain resource, the second frequency domain resource used for data transmission, and obtain, from the second subframe set, the subframe set used for data transmission.

It should be noted that, when using some frequency resources for the D2D communication, the base station divides the some frequency resources into time-frequency blocks that carry fewer bits. One identifier is allocated to each time-frequency block. The identifier is referred to as a resource declaration identifier index. Specifically, the obtaining, from the first frequency domain resource, the second frequency domain resource used for data transmission includes: obtaining an available resource declaration identifier index from the base station. Data of a terminal side is sent by using a time-frequency block corresponding to the obtained resource declaration identifier index.

S130. Repeatedly send a declaration message, where the declaration message includes: the second frequency domain resource and the second time domain resource.

Generally, the base station side further sets a quantity of times of sending the declaration message and a quantity of times of repeatedly sending each data packet, and the terminal repeatedly sends the second frequency domain resource and the second time domain resource according to the quantity of times of sending the declaration message, which can ensure that a terminal newly added to a cellular network may also receive a message indicating the second frequency domain resource and the second time domain resource that are used by the foregoing terminal, thereby improving reliability.

Specifically, the terminal repeatedly sends the declaration message by using a MAC control element (Control Elements, CE) field.

Optionally, the second time domain resource in the repeatedly sent declaration message includes: a second time domain resource used in a current time and a second time domain resource used next time. For example, content of the declaration message that is repeatedly sent by the terminal is: groupid, service type, TX time. groupid indicates an identifier of a service group to which the terminal belongs; service type indicates a data service type, including: a voice, a picture, a video stream, or the like; and TX time indicates, in two consecutive time periods, a subframe used for data transmission in the second subframe set in a current time period and a subframe used for data transmission in the second subframe set in a next time period, which is specifically implemented in multiple forms. Example 1: when locations of subframes used for data transmission in the second subframe set in each time period are the same, TX time includes two parts: a subframe number used for data transmission in the second subframe set + a bit identifier indicating whether the second frequency domain resource used for data transmission in next two times is occupied. The bit identifier is: 11, which indicates occupation in both of the two times; 10, which indicates occupation in the current time, and no occupation in the next time; and 01, which indicates no occupation in the current time, but occupation in the next time. In the case of no occupation in both of the next two times, the terminal does not send the declaration message. Example 2: when locations of subframes used for data transmission in the second subframe set in each time period are different, TX time includes two parts: a subframe number used for data transmission in the second subframe set in the current time period, and a subframe number used for data transmission in the second subframe set in the next time period.

After repeatedly sending the declaration message, the terminal may repeatedly send data according to the quantity of times of repeatedly sending each data packet that is set by the base station.

In addition, the terminal may further repeatedly send the second frequency domain resource and the second time domain resource by using a physical layer sequence. For example, referring to a schematic diagram of carrying a time domain resource by using a physical layer sequence shown in FIG. 2, a time period for resource declaration is shortened, which is only 2 ms. In addition, one resource block may carry 14 sequences in the time of 2 ms and each sequence location is corresponding to one subframe location used for data transmission. Therefore, a quantity of subframes used for data transmission and a quantity of sequence locations in the time period for resource declaration are the same and in a one-to-one correspondence. In FIG. 2, there are four numbers in total in the sequence, which are 1, 2, 3, and 4 respectively. 4 indicates occupation in both of the two times, 3 indicates occupation in the current time, and no occupation in the next time; 2 indicates no occupation in the current time, but occupation in the next time; and 1 indicates no occupation in either of the two times. Specifically, when repeatedly sending the declaration message, the terminal declares, to another terminal by sending a series of numbers, a second time domain resource occupied by the terminal, that is, the subframe set used for data transmission.

According to the resource broadcasting method provided in this embodiment of the present invention, after obtaining a resource allocated by a base station, a terminal first claims a frequency domain resource and a time domain resource that are to be used by the terminal, and then sends data. Therefore, a problem that two terminals occupy a same resource is resolved.

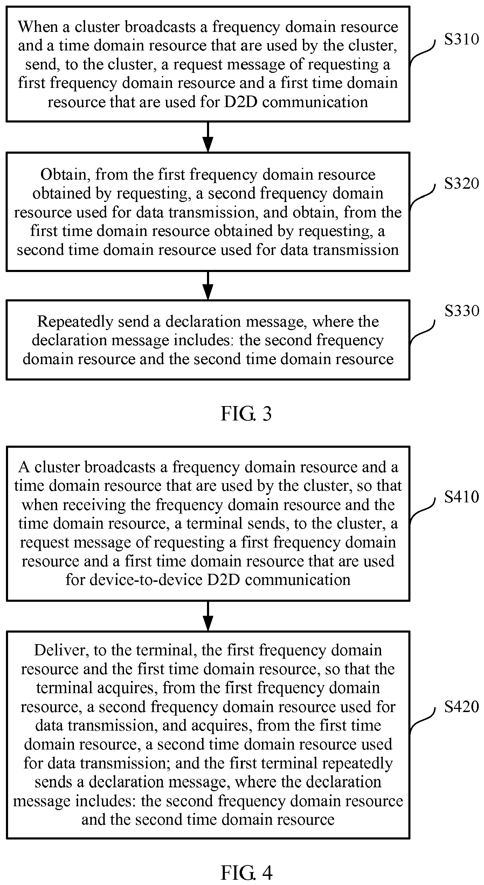

FIG. 3 is a flowchart of a resource broadcasting method according to Embodiment 2 of the present invention. As shown in FIG. 3, the method is executed by a terminal, and the method specifically includes the following steps:
S310. When a cluster broadcasts a frequency domain resource and a time domain resource that are used by the cluster, the cluster sends a request message of requesting a first frequency domain resource and a first time domain resource that are used for D2D communication.

In the case of no network coverage, a group of resources in a resource pool is preconfigured for the cluster, and a possible manner is: one resource, or multiple or even all resources. After reaching a preset geographical area, a cluster head first broadcasts a frequency domain resource and a time domain resource that are used by the cluster. The frequency domain resource is the foregoing preconfigured group of resources in the resource pool, and the time domain resource is a subframe set used by the cluster. Specifically, the cluster divides the subframe set used by the cluster into multiple subsets, and a specific format is shown as follows:

| **T₀** | **T₁** | **T₂** | **T₃** | **T₄** | **T₂'** |
|---|---|---|---|---|---|
| Declaring a resource frame | A terminal requests the resource frame from a cluster | The terminal sends a data frame | The cluster responds to the resource frame request | The terminal sends a declaration message frame | The terminal sends the data frame |

Specifically, the cluster sends a declaration message in a T₀ time period. The declaration message includes the frequency domain resource and the time domain resource that are used by the cluster; after the terminal receives the foregoing declaration message, if there is data that is to be sent, the terminal sends, to the cluster in a T₁ time period, the request message of requesting the first frequency domain resource and the first time domain resource that are used for D2D communication; and in a T₃ time period, the cluster delivers an allocation message to all terminals that request a resource. The allocation message includes the first frequency domain resource and the first time domain resource that are used by the terminal to perform D2D communication.

S320-S330 are the same as S120-S130.

It should be noted that, a second time domain resource in S320 is also a subframe set that may be used by the terminal in T₂ and T₂' time periods; in S330, the terminal repeatedly sends the declaration message in a T₄ time period.

According to the resource broadcasting method provided in this embodiment, in the case of no network coverage, a terminal can still perform normal communication, thereby resolving a problem that the terminal cannot be properly used due to a time-varying characteristic of a wireless signal.

FIG. 4 is a flowchart of a resource broadcasting method according to Embodiment 3 of the present invention. As shown in FIG. 4, the method is executed by a cluster, and the method specifically includes the following steps:
S410. A cluster broadcasts a frequency domain resource and a time domain resource that are used by the cluster, so that when receiving the frequency domain resource and the time domain resource, a terminal sends, to the cluster, a request message of requesting a first frequency domain resource and a first time domain resource that are used for device-to-device D2D communication.
   Optionally, the first time domain resource used for D2D communication is a subframe set used for D2D communication; and
   correspondingly, the second time domain resource used for data transmission is a subframe set used for data transmission in the subframe set used for D2D communication.
S420. Deliver, to the terminal, the first frequency domain resource and the first time domain resource, so that the terminal obtains, from the first frequency domain resource, a second frequency domain resource used for data transmission, and obtains, from the first time domain resource, a second time domain resource used for data transmission; and the first terminal repeatedly sends a declaration message, where the declaration message includes: the second frequency domain resource and the second time domain resource.

Optionally, the second time domain resource in the repeatedly sent declaration message includes: a second time domain resource used in a current time and a second time domain resource used next time.

Optionally, the declaration message is repeatedly sent by using a Media Access Control control element MAC CE field or a physical layer sequence.

According to the resource broadcasting method provided in this embodiment, in the case of no network coverage, a terminal can still perform normal communication, thereby resolving a problem that the terminal cannot be properly used due to a time-varying characteristic of a wireless signal.

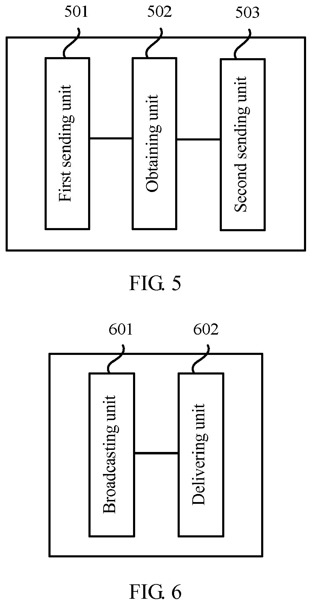

FIG. 5 is a schematic diagram of a resource broadcasting apparatus according to Embodiment 4 of the present invention. The apparatus may be configured to execute the method described in FIG. 1 or FIG. 3. In FIG. 5, the apparatus includes: a first sending unit 501, an obtaining unit 502, and a second sending unit 503.

The first sending unit 501 is configured to send a request message of requesting a first frequency domain resource and a first time domain resource that are used for device-to-device D2D communication.

The first sending unit 501 is specifically configured to: send, to a base station, the request message of requesting the first frequency domain resource and the first time domain resource that are used for D2D communication; or, when a cluster broadcasts a frequency domain resource and a time domain resource that are used by the cluster, send, to the cluster, the request message of requesting the first frequency domain resource and the first time domain resource that are used for D2D communication.

The first sending unit 501 is further specifically configured to send, to the base station, a request message of requesting a subframe set used for D2D communication.

The obtaining unit 502 is configured to obtain, from the first frequency domain resource obtained by requesting, a second frequency domain resource used for data transmission, and obtain, from the first time domain resource obtained by requesting, a second time domain resource used for data transmission.

The obtaining unit 502 is specifically configured to obtain, from the subframe set that is obtained by requesting and is used for D2D communication, a subframe set used for data transmission.

The second sending unit 503 is configured to repeatedly send a declaration message, where the declaration message includes: the second frequency domain resource and the second time domain resource.

The second time domain resource in the declaration message that is repeatedly sent by the second sending unit 503 includes: a second time domain resource used in a current time and a second time domain resource used next time.

The second sending unit 503 is specifically configured to:
repeatedly send the declaration message by using a Media Access Control control element MAC CE field; or
repeatedly send the declaration message by using a physical layer sequence.

According to the resource broadcasting apparatus provided in this embodiment of the present invention, after obtaining a resource allocated by a base station, a terminal first declares a frequency domain resource and a time domain resource that are to be used by the terminal, and then sends data. Therefore, a problem that two terminals occupy a same resource is resolved.

FIG. 6 is a schematic diagram of a resource broadcasting apparatus according to Embodiment 5 of the present invention. The apparatus may be configured to execute the method described in FIG. 4. In FIG. 6, the apparatus includes: a broadcasting unit 601 and a delivering unit 602.

The broadcasting unit 601 is configured to broadcast a frequency domain resource and a time domain resource that are used by a cluster, so that when receiving the frequency domain resource and the time domain resource, a terminal sends, to the cluster, a request message of requesting a first frequency domain resource and a first time domain resource that are used for device-to-device D2D communication.

The delivering unit 602 is configured to deliver, to the terminal, the first frequency domain resource and the first time domain resource, so that the terminal obtains, from the first frequency domain resource, a second frequency domain resource used for data transmission, and obtains, from the first time domain resource, a second time domain resource used for data transmission; and the first terminal repeatedly sends a declaration message, where the declaration message includes: the second frequency domain resource and the second time domain resource.

Optionally, the first time domain resource used for D2D communication is a subframe set used for D2D communication; and
correspondingly, the second time domain resource used for data transmission is a subframe set used for data transmission in the subframe set used for D2D communication.

Optionally, the second time domain resource in the repeatedly sent declaration message includes: a second time domain resource used in a current time and a second time domain resource used next time.

Optionally, the declaration message is repeatedly sent by using a Media Access Control control element MAC CE field or a physical layer sequence.

According to the resource broadcasting apparatus provided in this embodiment of the present invention, in the case of no network coverage, a terminal can still perform normal communication, thereby resolving a problem that the terminal cannot be properly used due to a time-varying characteristic of a wireless signal.

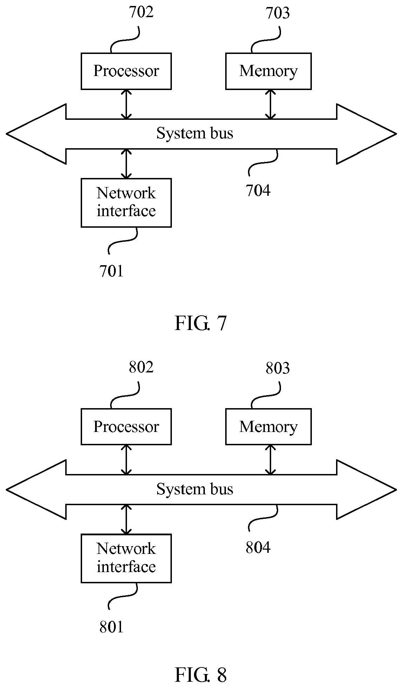

FIG. 7 is a schematic diagram of a resource broadcasting apparatus according to Embodiment 6 of the present invention. As shown in FIG. 7, the apparatus includes a network interface 701, a processor 702, and a memory 703. A system bus 704 is configured to connect the network interface 701, the processor 702, and the memory 703.

For example, the processor 702 may be a CPU.

The network interface 701 is configured to communicate with another device.

The memory 703 may be a permanent memory, for example, a hard disk drive and a flash memory, and the memory 703 has a software module and a device driver. The software module can implement various functions of the foregoing method of the present invention, and the device driver may be a network and interface driver.

Upon startup, these software components are loaded into the memory 703 and then are accessed by the processor 702 to execute the following instructions:
sending a request message of requesting a first frequency domain resource and a first time domain resource that are used for device-to-device D2D communication;
obtaining, from the first frequency domain resource obtained by requesting, a second frequency domain resource used for data transmission, and obtaining, from the first time domain resource obtained by requesting, a second time domain resource used for data transmission; and
repeatedly sending a declaration message, where the declaration message includes: the second frequency domain resource and the second time domain resource.

Further, an application program further includes an instruction that may be used by the processor 702 and the apparatus to execute the following process:
sending, to a base station, the request message of requesting the first frequency domain resource and the first time domain resource that are used for D2D communication; or
when a cluster broadcasts a frequency domain resource and a time domain resource that are used by the cluster, sending, to the cluster, the request message of requesting the first frequency domain resource and the first time domain resource that are used for D2D communication.

Further, the application program further includes an instruction that may be used by the processor 702 and the apparatus to execute the following process:
sending, to the base station, a request message of requesting a subframe set used for D2D communication.

The obtaining, from the first time domain resource obtained by requesting, a second time domain resource used for data transmission includes:
obtaining, from the subframe set used for D2D communication, a subframe set used for data transmission.

Optionally, the second time domain resource in the repeatedly sent declaration message includes: a second time domain resource used in a current time and a second time domain resource used next time.

Further, the application program further includes an instruction that may be used by the processor 702 and the apparatus to execute the following process:
repeatedly sending the declaration message by using a Media Access Control control element MAC CE field; or
repeatedly sending the declaration message by using a physical layer sequence.

According to the resource broadcasting apparatus provided in this embodiment of the present invention, after obtaining a resource allocated by a base station, a terminal first claims a frequency domain resource and a time domain resource that are to be used by the terminal, and then sends data. Therefore, a problem that two terminals occupy a same resource is resolved.

FIG. 8 is a schematic diagram of a resource broadcasting apparatus according to Embodiment 7 of the present invention. As shown in FIG. 8, the apparatus includes a network interface 801, a processor 802, and a memory 803. A system bus 804 is configured to connect the network interface 801, the processor 802, and the memory 803.

For example, the processor 802 may be a CPU.

The network interface 801 is configured to communicate with another device.

The memory 803 may be a permanent memory, for example, a hard disk drive and a flash memory, and the memory 803 has a software module and a device driver. The software module can implement various functions of the foregoing method of the present invention, and the device driver may be a network and interface driver.

Upon startup, these software components are loaded into the memory 803 and then are accessed by the processor 802 to execute the following instructions:
broadcasting a frequency domain resource and a time domain resource that are used by a cluster, so that when receiving the frequency domain resource and the time domain resource, a terminal sends, to the cluster, a request message of requesting a first frequency domain resource and a first time domain resource that are used for device-to-device D2D communication; and
delivering, to the terminal, the first frequency domain resource and the first time domain resource, so that the terminal obtains, from the first frequency domain resource, a second frequency domain resource used for data transmission, and obtains, from the first time domain resource, a second time domain resource used for data transmission; and the first terminal repeatedly sends a declaration message, where the declaration message includes: the second frequency domain resource and the second time domain resource.

Optionally, the first time domain resource used for D2D communication is a subframe set used for D2D communication; and
correspondingly, the second time domain resource used for data transmission is a subframe set used for data transmission in the subframe set used for D2D communication.

Optionally, the second time domain resource in the repeatedly sent declaration message includes: a second time domain resource used in a current time and a second time domain resource used next time.

Optionally, the declaration message is repeatedly sent by using a Media Access Control control element MAC CE field or a physical layer sequence.

According to the resource broadcasting apparatus provided in this embodiment of the present invention, in the case of no network coverage, a terminal can still perform normal communication, thereby resolving a problem that the terminal cannot be properly used due to a time-varying characteristic of a wireless signal.

A person skilled in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

Steps of methods or algorithms described in the embodiments disclosed in this specification may be implemented by hardware, a software module executed by a processor, or a combination thereof. The software module may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

In the foregoing specific implementation manners, the objective, technical solutions, and benefits of the present invention are further described in detail. It should be understood that the foregoing descriptions are merely specific implementation manners of the present invention, but are not intended to limit the protection scope of the present invention. Any modification, equivalent replacement, or improvement made without departing from principle of the present invention should fall within the protection scope of the present invention.

## Claims

1. A resource broadcasting method, wherein the method comprises:
sending (S110) a request message requesting a first frequency domain resource and a first time domain resource that are to be used for device-to-device D2D communication;
determining (S120), from the first frequency domain resource obtained by the request, a second frequency domain resource to be used for data transmission, and determining, from the first time domain resource obtained by request, a second time domain resource to be used for data transmission, wherein the second frequency domain resource is a part of the first frequency domain resource, and the second time domain resource is a part of the first time domain resource; and **characterised by** repeatedly sending (S130) a declaration message, wherein the declaration message comprises: said second frequency domain resource and said second time domain resource.

2. The method according to claim 1, wherein the sending a request message requesting a frequency domain resource and a time domain resource to be used for D2D communication comprises:
sending, to a base station, the request message of requesting the first frequency domain resource and the first time domain resource; or
when a cluster broadcasts a frequency domain resource and a time domain resource that are to be used by the cluster, sending, to the cluster, the request message of requesting the first frequency domain resource and the first time domain resource.

3. The method according to claim 2, wherein
the sending, to a base station, the request message of requesting the first time domain resource to be used for D2D communication comprises:
sending, to the base station, a request message requesting a subframe set to be used for D2D communication; and
the determining, from the first time domain resource obtained by requesting, a second time domain resource to be used for data transmission comprises:
determining, from the subframe set to be used for D2D communication, a subframe set to be used for data transmission.

4. The method according to any one of claims 1 to 3, wherein
the second time domain resource in the repeatedly sent declaration message comprises: a second time domain resource used in a current time and a second time domain resource to be used next time.

5. The method according to any one of claims 1 to 4, wherein the repeatedly sending a declaration message comprises:
repeatedly sending the declaration message by using a Media Access Control control element MAC CE field; or
repeatedly sending the declaration message by using a physical layer sequence.

6. The resource broadcasting method of any one of claims 1 to 5, wherein the method further comprises:
broadcasting, by a cluster, a frequency domain resource and a time domain resource that are to be used by the cluster; and
delivering, by the cluster to the terminal, the first frequency domain resource and the first time domain resource.

7. A resource broadcasting apparatus, wherein the apparatus comprises: a first sending unit (501), an obtaining unit (502), and a second sending unit (503), wherein
the first sending unit is configured to send a request message requesting a first frequency domain resource and a first time domain resource that are to be used for device-to-device D2D communication;
the obtaining unit is configured to determine, from the first frequency domain resource obtained by request, a second frequency domain resource to be used for data transmission, and determine, from the first time domain resource obtained by request, a second time domain resource to be used for data transmission, wherein the second frequency domain resource is a part of the first frequency domain resource, and the second time domain resource is a part of the first time domain resource; and **characterised by**
the second sending unit is configured to repeatedly send a declaration message, wherein the declaration message comprises: the second frequency domain resource and the second time domain resource.

8. The apparatus according to claim 7, wherein the first sending unit (501) is specifically configured to:
send, to a base station, the request message requesting the first frequency domain resource and the first time domain resource that are to be used for D2D communication; or
when a cluster broadcasts a frequency domain resource and a time domain resource that are to be used by the cluster, send, to the cluster, the request message requesting the first frequency domain resource and the first time domain resource that are to be used for D2D communication.

9. The apparatus according to claim 8, wherein
the first sending unit (501) is specifically configured to:
send, to the base station, a request message of requesting a subframe set to be used for D2D communication; and
the obtaining unit (502) is specifically configured to:
determine, from the subframe set that is obtained by requesting and is to be used for D2D communication, a subframe set to be used for data transmission.

10. The apparatus according to any one of claims 7 to 9, wherein
the second time domain resource in the declaration message that is repeatedly sent by the second sending unit (503) comprises: a second time domain resource used in a current time and a second time domain resource to be used next time.

11. The apparatus according to any one of claims 7 to 10, wherein the second sending unit (503) is specifically configured to:
repeatedly send the declaration message by using a Media Access Control control element MAC CE field; or
repeatedly send the declaration message by using a physical layer sequence.

12. A resource broadcasting apparatus according to any of claims 7 to 11, wherein the apparatus further comprises: a broadcasting unit (601) and a delivering unit (602), wherein
the broadcasting unit is configured to broadcast a frequency domain resource and a time domain resource that are to be used by a cluster; and
the delivering unit is configured to deliver, to the terminal, the first frequency domain resource and the first time domain resource.

## Patentansprüche

1. Ressourcen-Übertragungsverfahren, wobei das Verfahren Folgendes umfasst:
Senden (S110) einer Anfragenachricht, bei der eine erste Frequenzbereichs-Ressource und eine erste Zeitbereichsressource angefragt werden, die zur D2D-Kommunikation (Device-to-Device = Gerät zu Gerät) verwendet werden;
Bestimmen (S120) einer zweiten Frequenzbereichs-Ressource, die zur Datenübertragung verwendet wird, aus der ersten Frequenzbereichs-Ressource, die durch die Anfrage erhalten wird, und Bestimmen einer zweiten Zeitbereichsressource, die zur Datenübertragung verwendet wird, aus der ersten Zeitbereichsressource, die durch die Anfrage erhalten wird, wobei die zweite Frequenzbereichs-Ressource Teil der ersten Frequenzbereichs-Ressource ist und die zweite Zeitbereichsressource Teil der ersten Zeitbereichsressource ist; und **gekennzeichnet durch**
wiederholtes Senden (S130) einer Erklärungsnachricht, wobei die Erklärungsnachricht Folgendes umfasst: die zweite Frequenzbereichs-Ressource und die zweite Zeitbereichsressource.

2. Verfahren nach Anspruch 1, wobei das Senden einer Anfragenachricht, bei der eine Frequenzbereichs-Ressource und eine Zeitbereichsressource angefragt werden, die zur D2D-Kommunikation (Device-to-Device = Gerät zu Gerät) verwendet werden, Folgendes umfasst:
Senden der Anfragenachricht an eine Basisstation zum Anfragen der ersten Frequenzbereichs-Ressource und der ersten Zeitbereichsressource; oder
wenn ein Cluster eine Frequenzbereichs-Ressource und eine Zeitbereichsressource überträgt, die vom Cluster verwendet werden, Senden der Anfragenachricht an das Cluster zum Anfragen der ersten Frequenzbereichs-Ressource und der ersten Zeitbereichsressource.

3. Verfahren nach Anspruch 2, wobei
das Senden der Anfragenachricht an eine Basisstation zum Anfragen der ersten Zeitbereichsressource, die zur D2D-Kommunikation verwendet wird, Folgendes umfasst:
Senden einer Anfragenachricht an die Basisstation zum Anfragen einer Unterrahmengruppe, die zur D2D-Kommunikation verwendet wird; und
wobei das Bestimmen einer zweiten Zeitbereichsressource, die zur Datenübertragung verwendet wird, aus der ersten Zeitbereichsressource, die durch das Anfragen erhalten wird, Folgendes umfasst:
Bestimmen einer Unterrahmengruppe, die zur Datenübertragung verwendet wird, aus der Unterrahmengruppe, die zur D2D-Kommunikation verwendet wird.

4. Verfahren nach einem der Ansprüche 1 bis 3, wobei
die zweite Zeitbereichsressource in der wiederholt gesendeten Erklärungsnachricht Folgendes umfasst: eine zweite Zeitbereichsressource, die zu einem aktuellen Zeitpunkt verwendet wird und eine zweite Zeitbereichsressource, die beim nächsten Mal verwendet wird.

5. Verfahren nach einem der Ansprüche 1 bis 4, wobei das wiederholte Senden einer Erklärungsnachricht Folgendes umfasst:
wiederholtes Senden der Erklärungsnachricht mithilfe eines MAC-CE-Feldes (Media Access Control Control Element = Kontrollelement zur Medienzugriffssteuerung); oder wiederholtes Senden der Erklärungsnachricht mithilfe einer physikalischen Schichtsequenz.

6. Ressourcen-Übertragungsverfahren nach einem der Ansprüche 1 bis 5, wobei das Verfahren ferner Folgendes umfasst:
Übertragen einer Frequenzbereichs-Ressource und einer Zeitbereichsressource durch ein Cluster, die vom Cluster verwendet werden; und
Liefern der ersten Frequenzbereichs-Ressource und der ersten Zeitbereichsressource durch das Cluster an das Endgerät.

7. Ressourcen-Übertragungsapparat, wobei der Apparat Folgendes umfasst: eine erste Sendeeinheit (501), eine Erhalteeinheit (502) und eine zweite Sendeeinheit (503), wobei die erste Sendeeinheit für das Senden einer Anfragenachricht konfiguriert ist, bei der eine erste Frequenzbereichs-Ressource und eine erste Zeitbereichsressource angefragt werden, die zur D2D-Kommunikation (Device-to-Device = Gerät zu Gerät) verwendet werden;
die Erhalteeinheit für das Bestimmen einer zweiten Frequenzbereichs-Ressource konfiguriert ist, die zur Datenübertragung verwendet wird, aus der ersten Frequenzbereichs-Ressource, die durch die Anfrage erhalten wird, und zum Bestimmen einer zweiten Zeitbereichsressource, die zur Datenübertragung verwendet wird, aus der ersten Zeitbereichsressource, die durch die Anfrage erhalten wird, wobei die zweite Frequenzbereichs-Ressource Teil der ersten Frequenzbereichs-Ressource ist und die zweite Zeitbereichsressource Teil der ersten Zeitbereichsressource ist; und **dadurch gekennzeichnet, dass**
die zweite Sendeeinheit für das wiederholte Senden einer Erklärungsnachricht konfiguriert ist, wobei die Erklärungsnachricht Folgendes umfasst: die zweite Frequenzbereichs-Ressource und die zweite Zeitbereichsressource.

8. Apparat nach Anspruch 7, wobei die erste Sendeeinheit (501) speziell für Folgendes konfiguriert ist:
Senden der Anfragenachricht an eine Basisstation, bei der die erste Frequenzbereichs-Ressource und die erste Zeitbereichsressource angefragt werden, die zur D2D-Kommunikation verwendet werden; oder
wenn ein Cluster eine Frequenzbereichs-Ressource und eine Zeitbereichsressource überträgt, die vom Cluster verwendet werden, Senden der Anfragenachricht an das Cluster, bei der die erste Frequenzbereichs-Ressource und die erste Zeitbereichsressource angefragt werden, die zur D2D-Kommunikation verwendet werden.

9. Apparat nach Anspruch 8, wobei
die erste Sendeeinheit (501) speziell für Folgendes konfiguriert ist:
Senden einer Anfragenachricht an die Basisstation zum Anfragen einer Unterrahmengruppe, die zur D2D-Kommunikation verwendet wird; und
die erste Erhalteeinheit (502) speziell für Folgendes konfiguriert ist:
Bestimmen einer Unterrahmengruppe, die zur Datenübertragung verwendet wird, aus der Unterrahmengruppe, die durch das Anfragen erhalten und zur D2D-Kommunikation verwendet wird.

10. Apparat nach einem der Ansprüche 7 bis 9, wobei
die zweite Zeitbereichsressource in der Erklärungsnachricht, die von der zweiten Sendeeinheit (503) wiederholt gesendet wird, Folgendes umfasst: eine zweite Zeitbereichsressource, die zu einem aktuellen Zeitpunkt verwendet wird und eine zweite Zeitbereichsressource, die beim nächsten Mal verwendet wird.

11. Apparat nach einem der Ansprüche 7 bis 10, wobei die zweite Sendeeinheit (503) speziell für Folgendes konfiguriert ist:
wiederholtes Senden der Erklärungsnachricht mithilfe eines MAC-CE-Feldes (Media Access Control Control Element = Kontrollelement zur Medienzugriffssteuerung); oder
wiederholtes Senden der Erklärungsnachricht mithilfe einer physikalischen Schichtsequenz.

12. Ressourcen-Übertragungsapparat nach einem der Ansprüche 7 bis 11, wobei der Apparat ferner Folgendes umfasst: eine Übertragungseinheit (601) und eine Liefereinheit (602), wobei
die Übertragungseinheit für das Übertragen einer Frequenzbereichs-Ressource und einer Zeitbereichsressource konfiguriert ist, die von einem Cluster verwendet werden; und
die Liefereinheit für das Liefern der ersten Frequenzbereichs-Ressource und der ersten Zeitbereichsressource an das Endgerät konfiguriert ist.

## Revendications

1. Procédé de diffusion de ressources, le procédé comprenant :
l'envoi (S110) d'un message de demande d'une première ressource du domaine fréquentiel et une première ressource du domaine temporel à utiliser pour la communication de dispositif à dispositif, D2D ;
la détermination (S120), à partir de la première ressource du domaine fréquentiel obtenue par la demande, d'une seconde ressource du domaine fréquentiel à utiliser pour la transmission de données, et la détermination, à partir de la première ressource du domaine temporel obtenue sur demande, d'une seconde ressource du domaine temporel à utiliser pour la transmission de données, la seconde ressource du domaine fréquentiel faisant partie de la première ressource du domaine fréquentiel et la seconde ressource du domaine temporel faisant partie de la première ressource du domaine temporel ; et
**caractérisé par** l'envoi (S130) à plusieurs reprises d'un message de déclaration, le message de déclaration comportant ladite seconde ressource du domaine fréquentiel et ladite seconde ressource du domaine temporel.

2. Procédé selon la revendication 1, dans lequel l'envoi d'un message de demande demandant une ressource du domaine fréquentiel et une ressource du domaine temporel à utiliser pour la communication D2D comprend :
l'envoi, à une station de base, du message de demande de la première ressource du domaine fréquentiel et de la première ressource du domaine temporel ; ou
lorsqu'un groupe diffuse une ressource du domaine fréquentiel et une ressource du domaine temporel qui doivent être utilisées par le groupe, l'envoi, au groupe, du message de demande de la première ressource du domaine fréquentiel et de la première ressource du domaine temporel.

3. Procédé selon la revendication 2, dans lequel
l'envoi, à une station de base, du message de demande de la première ressource du domaine temporel à utiliser pour la communication D2D comprend :
l'envoi, à la station de base, d'un message de demande d'un ensemble de sous-trames à utiliser pour la communication D2D ; et
la détermination, à partir de la première ressource de domaine temporel obtenue sur demande, d'une seconde ressource de domaine temporel à utiliser pour la transmission de données comprend :
la détermination, à partir de l'ensemble de sous-trames à utiliser pour la communication D2D, d'un ensemble de sous-trames à utiliser pour la transmission de données.

4. Procédé selon l'une quelconque des revendications 1 à 3, dans lequel la seconde ressource de domaine temporel dans le message de déclaration envoyé à plusieurs reprises comprend : une seconde ressource de domaine temporel utilisée à un moment donné et une seconde ressource de domaine temporel à utiliser la prochaine fois.

5. Procédé selon l'une quelconque des revendications 1 à 4, dans lequel l'envoi à plusieurs reprises d'un message de déclaration comprend :
l'envoi à plusieurs reprises du message de déclaration à l'aide d'un champ MAC CE de l'élément de commande d'accès au média ; ou
l'envoi à plusieurs reprises du message de déclaration à l'aide d'une séquence de couches physiques.

6. Procédé de diffusion de ressources selon l'une quelconque des revendications 1 à 5, le procédé comprenant en outre :
la diffusion, par un groupe, d'une ressource du domaine fréquentiel et d'une ressource du domaine temporel qui doivent être utilisées par le groupe ; et
la fourniture, par le groupe au terminal, de la première ressource du domaine fréquentiel et de la première ressource du domaine temporel.

7. Appareil de diffusion de ressources, l'appareil comprenant : une première unité d'envoi (501), une unité d'obtention (502) et une seconde unité d'envoi (503), la première unité d'envoi étant configurée pour envoyer un message de demande d'une première ressource du domaine fréquentiel et une première ressource du domaine temporel qui doivent être utilisées pour une communication de dispositif à dispositif, D2D ;
l'unité d'obtention étant configurée pour déterminer, à partir de la première ressource du domaine fréquentiel obtenue sur demande, une seconde ressource du domaine fréquentiel à utiliser pour la transmission de données, et déterminer, à partir de la première ressource du domaine temporel obtenue sur demande, une seconde ressource du domaine temporel à utiliser pour la transmission de données, la seconde ressource du domaine fréquentiel faisant partie de la première ressource du domaine fréquentiel et la seconde ressource du domaine temporel faisant partie de la première ressource du domaine temporel ; et **caractérisé en ce que** la seconde unité d'envoi est configurée pour envoyer à plusieurs reprises un message de déclaration, le message de déclaration comprenant : la seconde ressource du domaine fréquentiel et la seconde ressource du domaine temporel.

8. Appareil selon la revendication 7, dans lequel la première unité d'émission (501) est spécifiquement configurée pour :
envoyer, à une station de base, le message de demande de la première ressource du domaine fréquentiel et de la première ressource du domaine temporel qui doivent être utilisées pour la communication D2D ; ou
lorsqu'un groupe diffuse une ressource du domaine fréquentiel et une ressource du domaine temporel qui doivent être utilisées par le groupe, envoyer, au groupe, le message de demande de la première ressource du domaine fréquentiel et de la première ressource du domaine temporel qui doivent être utilisées pour la communication D2D.

9. Appareil selon la revendication 8, dans lequel
la première unité d'envoi (501) est spécifiquement configurée pour :
envoyer, à la station de base, un message de demande d'un ensemble de sous-trames à utiliser pour la communication D2D ; et
l'unité d'obtention (502) est spécifiquement configurée pour :
déterminer, à partir de l'ensemble de sous-trames qui est obtenu sur demande et qui doit être utilisé pour la communication D2D, un ensemble de sous-trames à utiliser pour la transmission de données.

10. Appareil selon l'une quelconque des revendications 7 à 9, dans lequel la seconde ressource de domaine temporel dans le message de déclaration qui est envoyée à plusieurs reprises par la seconde unité d'envoi (503) comprend : une seconde ressource de domaine temporel utilisée à un moment donné et une seconde ressource de domaine temporel à utiliser la prochaine fois.

11. Appareil selon l'une quelconque des revendications 7 à 10, dans lequel la seconde unité d'envoi (503) est spécifiquement configurée pour :
envoyer le message de déclaration à plusieurs reprises à l'aide d'un champ MAC CE de l'élément de commande d'accès au média ; ou pour
envoyer à plusieurs reprises le message de déclaration à l'aide d'une séquence de couches physiques.

12. Appareil de diffusion de ressources selon l'une quelconque des revendications 7 à 11, dans lequel l'appareil comprend en outre : une unité de diffusion (601) et une unité de distribution (602), dans lequel
l'unité de diffusion est configurée pour diffuser une ressource du domaine fréquentiel et une ressource du domaine temporel qui doivent être utilisées par un groupe ; et
l'unité de diffusion est configurée pour fournir, au terminal, la première ressource du domaine fréquentiel et la première ressource du domaine temporel.
